# EUROPEAN PATENT APPLICATION

(11) **EP 4 435 654 A1**
(43) Date of publication of application: **25.09.2024**
(21) Application number: 23315061.4
(22) Date of filing: 24.03.2023
(51) Int. Cl.: G06F 21/62, G06K 7/14, G06Q 10/02, H04W 12/02

(54) **MULTI-CRYPTION MODEL AND SINGLE AUTHENTIC QR GENERATOR**

(71) Applicant: Amadeus S.A.S., 06410 Biot (FR)
(72) Inventor: AREGALA, Bhavani, 560102 Karnataka (IN); N, Anand Kumar, 560043 Karnataka (IN)
(74) Representative: Samson & Partner Patentanwälte mbB

(57) **Abstract**

A data processing system is used to encode and aggregate data sets from different sources and embed the conglomerated data in a single QR code. The encoding uses identifications and encryption keys to maintain a provider-level segmentation of the aggregated data. When scanning the QR code, the decoding of data sets is also done in a provider-specific manner, thereby keeping other data parts of the QR code confidential. Thus, the housekeeping burden on a user is mitigated as only a single QR code for multiple service providers is necessary, while data security is maintained.

## Description

### FIELD

The present disclosure is generally related to the field of Quick Response (QR) code generation and reading.

### BACKGROUND

According to the scientific paper "Autoencoder Artificial Neural Network Public Key Cryptography in Unsecure Public channel Communication" by Vikas Sagar & Krishan Kumar, cryptography is a procedure to hide data so that it cannot be access or modified by any unauthorized entity. The paper explains that many cryptographic algorithms exist to maintain security, but that technology grew each and every day so new algorithms are sought to maintain the security at higher level. Artificial neural networks are used to increase the security during data communication in the digital world: Autoencoder Neural Network is an approach in the era of the digital world that is used in cryptographic algorithms for encryption and decryption to increase the strength of the security.

TW 201401834 A deals with authentication using one-time passwords (OTP).

WO2019234426 describes a computer-implemented method for managing third-party access to data, to increase data security and/or privacy. A request to access data is received from a third-party computer, wherein the request is indicative of at least one requested operation. A validity of each of the requested operations is determined in dependence on permission data stored in a distributed public ledger. The permissions data defines, for said third-party computer, a set of permissible operations and one or more permissible data attributes associated with each of the set of permissible operations. The request and the validity are logged in the distributed public ledger. For each of the requested operations, if the requested operation is valid, there is created, on the public ledger, an electronic token enabling the third-party computer to obtain access to one or more of the permissible data attributes associated with the requested operation, wherein the electronic token comprises information indicative of a location of the data attributes. A time-dependent transformation is applied to an element of the electronic token, and the electronic token is communicated from the public ledger to the third-party computer.

### SUMMARY

The main aspects of the present disclosure are defined by the independent claims.

According to a first aspect, a method of data processing of a first set of data and a second set of data is provided. The first and second set of data are encoded to create a unified representation of the first and second set of data. The sets are then represented in a single quick response code (QR code). At least one cryptographic key from a first set of cryptographic keys associated with the first set of data and at least one cryptographic key from a second set of cryptographic keys associated with the second set of data are used for this encoding. The method further entails the first set of data being decoded from the single QR code based on the first set of cryptographic keys or the second set of data being decoded from the single QR code based on the second set of cryptographic keys.

According to a second aspect, a data processing system for creating a quick response code (QR code) is provided. The QR code represents a first set of data and a second set of data. The data processing system has an encoding unit to create a unified representation of the first and second set of data represented as the single QR code. At least one cryptographic key from a first set of cryptographic keys associated with the first set of data and at least one cryptographic key from a second set of cryptographic keys associated with the second set of data are used for the encoding. The data processing system further has a decoding unit to read out data related to the first set of data from the single QR code based on the first set of cryptographic keys or read out data related to the second set of data from the single QR code based on the second set of cryptographic keys.

Further aspects are set forth in the dependent claims as well as in the following general and detailed description.

### GENERAL DESCRIPTION

According to the first aspect, data is encoded in a quick response code, or short QR code. A QR code is a type of matrix barcode (or two-dimensional barcode). A barcode is a machine-readable optical label that can contain information about the item to which the barcode is attached. In practice, QR codes often contain data for a locator, identifier, or tracker that points to a website or application. QR codes use four standardized encoding modes, namely numeric, alphanumeric, byte/binary, and kanji, to store data efficiently. In addition, extensions thereto may also be used.

QR codes feature faster readability and greater storage capacity compared to standard Universal Product Code (UPC) barcodes. The Universal Product Code is a barcode symbology that is widely used worldwide for tracking trade items in stores. UPC consists of 12 digits that are uniquely assigned to each trade item. The usual applications include product tracking, item identification, time tracking, document management, and general marketing.

A QR code consists of black squares arranged in a square grid on a white background, including some fiducial markers, which can be read by an imaging device such as a camera, and processed using Reed-Solomon error correction until the image can be appropriately interpreted. The required data is then extracted from patterns that are present in both horizontal and vertical components of the image.

There are several standards specifying mechanisms of encoding data as QR codes, such as ISO/IEC 18004:2015 *Information - Automatic identification and data capture techniques* - *QR Code barcode symbology specification* or JIS X 0510.

A smartphone may be used as a QR code scanner, displaying the code and converting it to some useful form such as a Uniform Resource Locator (URL) for a website, thereby removing the need for a user to type the URL into a web browser. URLs are colloquially termed web addresses and reference to a web resource that specifies the location of the web resource on a computer network and a mechanism for retrieving the web resource.

QR codes can also be used in storing information for use by organizations. An example is the Philippines National Bureau of Investigation (NBI) where NBI clearances are provided with a QR code. Users may receive text, add a vCard contact to their device, open a URL, or compose an e-mail or text message after scanning QR codes. Users can generate and print their own QR codes for others to scan and use by visiting one of several pay or free QR code-generating sites or apps. Applications and/or interfaces to generate and/or scan QR codes can be found on nearly all smartphone devices today.

QR codes that store addresses and URLs may appear in magazines, on signs, on buses, on business cards, or on almost any object users might interact with and want further information about. Users with a camera phone equipped with the correct reader application can scan the image of the QR code to display text, contact information, connect to a wireless network, or open a web page in the phone's browser. This act of linking from physical world objects to web-based information repositories is referred to as hardlinking or object hyperlinking. QR codes also may be linked to a location to track where a code has been scanned. Either the application that scans the QR code retrieves the geo information by using GPS (Global Positioning System) and cell tower triangulation (aGPS) or the URL encoded in the QR code itself is associated with a location.

As mentioned above, the QR code represents a given set of data in an encrypted form. One or more cryptographic keys are used to secure information within the QR code. A key in cryptography is a piece of information, usually a string of numbers or letters that are stored in a file, which, when processed through a cryptographic algorithm, can encode or decode cryptographic data. Based on the used method, the key can be different sizes and varieties, but in all cases, the strength of the encryption relies on the security of the key being maintained. A key's security strength depends on the cryptographic algorithm of the key, the size of the key, the generation of the key, and the process of key exchange:

An Auto Secure Code generator may be used to encode and/or encrypt multiple different data portions from one or more data sources. A multi crypted QR generator may be used to create a single QR code based on the data portions. Each of these data portions may be related to a dedicated encryption key. Alternatively, a plurality of those data portions may be associated with the same cryptographic key.

In some embodiments, the same Auto Secure Code generator may be used to decode and/or decrypt one or more data portions from the single QR code using one or more cryptographic keys associated with the respective data portion. These data portions may belong to a first or second set of data. The data sets may be, for example, concatenated into a single JavaScript Object Notation (JSON) or Extensible Markup Language (XML) response, i.e. a single data file.

JavaScript Object Notation (JSON) is an open standard file format and data interchange format that uses human-readable text to store and transmit data objects consisting of attribute-value pairs and arrays (or other serializable values). It is a common data format with diverse uses in electronic data interchange, including that of web applications with servers. JSON is a language-independent data format. It was derived from JavaScript, but many modern programming languages include code to generate and parse JSON-format data. JSON filenames use the extension .json. Any valid JSON file is a valid JavaScript (.js)file, even though it makes no changes to a web page on its own. JSON is also standardized, for example, in ISO/IEC 21778:2017 and RFC 8259.

Extensible Markup Language (XML) is a markup language and file format for storing, transmitting, and reconstructing arbitrary data. It defines a set of rules for encoding documents in a format that is both human-readable and machine-readable. XML emphasizes simplicity, generality, and usability across the Internet. It is a textual data format with strong support via Unicode for different human languages. Although the design of XML focuses on documents, the language is widely used for the representation of arbitrary data structures such as those used in web services. Several schema systems exist to aid in the definition of XML-based languages, while programmers have developed many application programming interfaces (APIs) to aid the processing of XML data.

Multiple encrypted data segments may be added together to obtain a single JSON or XML response and the entire data may then be used to generate the single QR code.

In some embodiments, the concatenated and/or added together data segments, i.e. the entire data to be encoded and/or encrypted, may be used to generate a Uniform Resource Locator (URL) or a shortened URL for the entire response. Based on this (shortened) URL a QR code may then be generated. In some of these embodiments, this can be a dynamic QR code. Dynamic QR codes send users on to specific information or web pages, just like any other QR code, however, the URL encoded in dynamic QR codes redirects to a second URL that can be changed on demand, even after a code is, for example, printed or otherwise associated with an item. In contrast, static QR codes cannot be changed like that.

In some other embodiments, the data segments relate to building blueprints, financial data, technical specifications of ships, cars, or other vehicles. In still other embodiments, the data segments relate to confidential digital documents, such as passports, bank, or protected health information of users. In some embodiments, providers may be internet service providers (ISP), providers of online storage facilities and/or capabilities, or the like.

In some embodiments, the data segments of the data sets relate to travel segments such as hotel reservations and flight itineraries. In some embodiments different data elements or segments may be extracted from the single QR code using an encryption or input key that is used by a travel service provider.

In some embodiments, data segments are secured within the single QR code with a travel provider encryption key. Thereby, only the travel provider to which the encryption key belongs may access the information within that data segments.

In some embodiments, an auto code generator for encryption and decryption keys may help to save travel provider information without actually saving the original key of the travel provider, e.g. the travel provider's private key.

Using a single QR code to store different information, e.g. information on different personality levels such as bank authentication information, personal data such as eye colour and height of the user, as well as publicly available information on the user's residence, has the advantage for the user to only have to carry a single documents equipped with such a QR code instead of a multitude of individual documents; one for each set of information that may be unrelated to the other sets of information.

For example, a user previously needed to carry multiple QR codes during a trip, such as a business trip of a family holiday, namely one per travel product provider for the trip, e.g. one QR code for the hotel in which the user stayed, one QR code for the airline with which he/she flew to the trip's destination, and one QR code for the car rental company. It was cumbersome to manage multiple QR codes and tickets during a trip and there was no proper system to help the user to handle multiple travel segments with just one single QR code.

According to the present disclosure, multiple data contents or QR details from providers or aggregators may be embedded into a single secure QR code with a provider level encryption. For this purpose, provider-specific encryption keys may be used during the generation of the QR code, i.e. during the embedding of the information in the QR code. As stated above, this may be a single QR code for a plurality of different providers and their services offered.

In some embodiments, an Auto Secure Code generator stores both the encryption and decryption keys that are associated with the individual providers. This may also help the individual providers, more specifically a human or automated scanner employed by a provider to execute or check a user's permission or access, to securely scan the QR code with their decryption code, e.g. a private key of the respective provider, and access only the part of the embedded content that is relevant to this specific provider, which provides security to the user's data, in particular confidential data such as personally identifiable information (PII) beyond the purview of the provider.

In some embodiments, the QR codes are accessible by both the providers and the user, for example, by an airline and the passenger.

In some embodiments, the single QR code is saved to an internet storage cloud or within a blockchain and is accessible to the provider using time dependent obfuscation. A blockchain is a type of distributed ledger technology (DLT) that comprises growing lists of records, called blocks, that are securely linked together using cryptography. Each block contains a cryptographic hash of the previous block, a timestamp, and transaction data generally represented as a hash tree aka Merkle tree, where data nodes are represented by leaves. The timestamp proves that the transaction data existed when the block was created. Since each block contains information about the previous block, they effectively form a chain, with each additional block linking to the ones before it. Consequently, blockchain transactions are irreversible in that, once they are recorded, the data in any given block cannot be altered retroactively without altering all subsequent blocks.

In some embodiments, the individual data segments and/or data sets are encrypted and saved on an internet storage cloud or in a blockchain and providers are able to access segments that are associated with them separately.

In some embodiments, data segments may be added and/or modified during, for example, a booking process of an itinerary that is then associated with the QR code. To this end various approaches may be used. In some embodiments, a dynamic QR code may be used where the underlining data segments are updated in a blockchain. In some other embodiments, the user and/or provider may have a link to the QR code in the internet storage cloud or within the blockchain and the link, or more precisely the target to which said links points, is updated whenever a change within the data segments occurs. In some other embodiments, the content that is underlying the dynamic QR code may be updated.

For example, a virtual contact card or vCard that is mainly used to make it easier to share contact details on mobile devices may be implemented using a vCard QR code generator which makes it even more convenient for contact details to be shared and saved with just a single scan.

Since it is difficult for users to manage and handle multiple QR codes and/or URLs for different data segments or data sets, according to the present invention, multiple data elements may be handled using a single QR code, which eases the job, for example, during travelling for both the user, i.e. the traveller, as well as the travel system. Such a multi-cryptic method, for example, could be implemented across multiple security systems like payment providers and incorporate check-in's and check-out's for hospitality providers.

In some embodiments, data of the first and second set of data comprises multi-segmented information. Each data segment may be associated with an identification or access credential as well as an authentication key. A QR generator may merge the multi-segmented information into the single QR code based on the identifications or access credentials and authentication keys. The identification and/or access credential may be a user-specific pin number, an alphanumeric password, a fingerprint, a stored retinal scan, or the like. The data segments may relate to both personalized data such as personally identifiable information (PII) and external data such as a train number, a bank account number, or confidential information of any kind.

In some embodiments, more than two data sets are embedded into a single QR code. In some of these embodiments, a third set of data, for example, contains no classified information and said information may be accessible without using any encryption keys, whereas the first and second data sets each require a corresponding encryption key and/or identifications or access credentials in order to access them.

In some embodiments, the encoding of information, i.e. one or more data sets, is based on a private key. An identification may be used to encrypt a data segment or a set of data. The encryption may be performed using an autoencoder. The encoding may be performed by an Auto Secure Code generator. An autoencoder, also called auto-associator, is an Artificial Neural Network (ANN) that falls in the unsupervised learning category. An autoencoder neural network applies backpropagation processes to set the target values to be equal to the inputs. Because of its unsupervised, unpredictability and randomness property it's very helpful in security applications.

An autoencoder is basically used to copy the input to the output. Autoencoders compress their input by a procedure that's called latent-space representation, and then regenerate the output to be the same as the input. An autoencoder is a combination of two individual unites, namely an encoder and a decoder. The encoder part of the autoencoder neural network compresses the input into a latent-space representation h=f(x). Then the decoder part of the autoencoder neural network reassembles data that is generate by the encoder, which is in latent space representation form, r=g(h).

In some embodiments, the decoding may be performed by using an autoencoder Artificial Neural Network Public Key Cryptography algorithm (AANNPKC algorithm) to decode a data segment or a set of data. Security depends on the key length in basically any security and/or encryption algorithm. In AANNPKC the key (key values) depend on the plaintext length and thereby only on the plaintext itself. This means the key value changes each time the plain text is changed and the security also depends on the plaintext length.

In some embodiments, a first set of data and a first set of cryptographic keys relate to a first entity, whereas a second set of data and a second set of cryptographic keys relate to a second entity. Such an entity, for example, could be a payment processor, an airline, a web hoster, a security company, or the like. Each entity may be designated to read out parts of the embedded information from the single QR code, namely the parts that are associated with the respective entity. The single QR code may be generated based on the identifications or access credentials and encryption keys of those entities.

In some embodiments, the sets of data may refer to itineraries or parts thereof and the entities may represent at least two different travel product providers, e.g. a hotel and a car rental operator.

In some embodiments, the first set of data is associated with a first entity and the second set of data is associated with a second entity. The first entity may process the single QR code using an access credential associated with it during decoding of the QR code. Subsequently, when the access credential was accepted, an additional encryption key associated with the first entity may be prompted as a second layer of security. If both security checks were successful access to the stored information may be granted to the first entity by providing a reference to the first data set encoded in the single QR code.

For example, a hotel clerk may scan a QR code on the travel documents of a hotel guest that also includes the guests air itinerary in the same QR code. The QR code scanner used by the hotel clerk may be outfitted with the hotel's private security key matching a public key used during encoding, i.e. embedding, the relevant hotel reservation information within the QR code. Upon both the hotel's id and associated private encryption key are verified the hotel clerk may get an "Accepted" response displayed on the used QR scanner.

In some embodiments, when attempting to access a set of data that is encoded within the single QR code without providing the corresponding identification or access credential as well as the corresponding authentication key, an error message may be prompted. Consequently, access to said set of data may be denied when not providing the corresponding credentials and/or passwords, such as associated encryption keys with which the data has been encrypted.

In some embodiments, the single QR code may be a dynamic QR code. In some of these embodiments, some or all of the data underlying the first or second set of data, i.e., the data represented by the single QR code is changeable without changing the single QR code itself. For example, the underlying information segments in a blockchain may be updated instead. According to another example, the resource to which a hyperlink, which is encoded in the ,QR code, refers is amended or updated.

In some embodiments, the single QR code may be stored in a cloud memory, e.g., an internet storage cloud. An entity to which a set of data stored in the single QR code relates, may read that QR code directly from said cloud memory without an interim stage in which the user first having to download the QR code to his/her personal device in order to allow the entity to scan the OR code. In some of these embodiments the entity has access to the whole QR code and may extract any data set related to it therefrom using the appropriate credentials and/or keys.

In some embodiment, the single QR code is secured and/or registered in a blockchain. This way the QR code can be considered trusted and/or genuine by other users, entities, providers, or the like. As described in detail above, a blockchain is a sort of ledger that may be publicly inspected and all subsequent transactions etc. are dependent on the previous values of the blocks already stored in this ledger, which makes it difficult to forge a past entry, i.e., a previous block, in the blockchain.

In some embodiments, the data underlying the first and second set of data may be concatenated into a single JSON or XML response by adding multiple encrypted segments. The entire data may then be used to generate a shortened Uniform Resource Locator (URL) for the entire response. This shortened URL may then be used to generate the dynamic QR code.

In some embodiments, for each data segment or set of data a separate shortened URL may be created. Subsequently, all these individual (shortened) URLs may be embedded in the dynamic QR code. For example, for three individual sets of data relating to three different entities such as an airline, a hotel, and a car rental service three individual shortened URLs are created, which are subsequently embedded in the single QR code. Any one of those entities may then later scan the QR code and read out the specific URL that relates to the set of data corresponding to this entity.

In some embodiments, the dynamic QR code may comprise sub-matrices that correspond to the multiple shortened URLs.

According to the second aspect, any of the above described actions can be performed by a data processing system. This system creates a quick response code (QR code) that represents a first and second set of data. The data processing system has an encoding unit to create a unified representation of the first and second set of data represented by the single QR code. At least one cryptographic key from a first set of cryptographic keys associated with the first set of data and at least one cryptographic key from a second set of cryptographic keys associated with the second set of data are used for the encoding, i.e., embedding of the data sets into the single QR code. The data processing system also has the capability to scan the QR code and use a decoding unit to read out data related to the first or second set of data from the single QR code. For the data extraction the first and second set of cryptographic keys are utilized.

The data processing system further has a decoding unit to read out data related to the first set of data from the single QR code based on the first set of cryptographic keys or read out data related to the second set of data from the single QR code based on the second set of cryptographic keys.

### BRIEF DESCRIPTION OF THE DRAWINGS

Examples of the invention are now described, also with reference to the accompanying drawings, wherein
- Fig. 1: schematically illustrates an example of a data processing system with authentication systems with an encoding and decoding unit, respectively, that can be interacted with by a user,
- Fig. 2: schematically illustrates parts of the data processing system of Fig. 1, particularly, the inner workings of the encoding and decoding,
- Fig. 3: schematically illustrates the authentication system to decode information from a QR code,
- Fig. 4: schematically shows the exchange of messages between a user/client, a data aggregator, and different providers during the creation of an itinerary,
- Fig. 5a: is a flowchart illustrating the process of encoding data in the QR code;
- Fig. 5b: is a flowchart illustrating the process of decoding data from the QR code;
- Fig. 6: is a schematic computer on which the method of encoding and/or decoding information is performed.

The drawings and the description of the drawings are of examples of the invention and are not of the invention itself. Like reference signs refer to like elements throughout the following description of examples.

### DESCRIPTION OF EXAMPLES

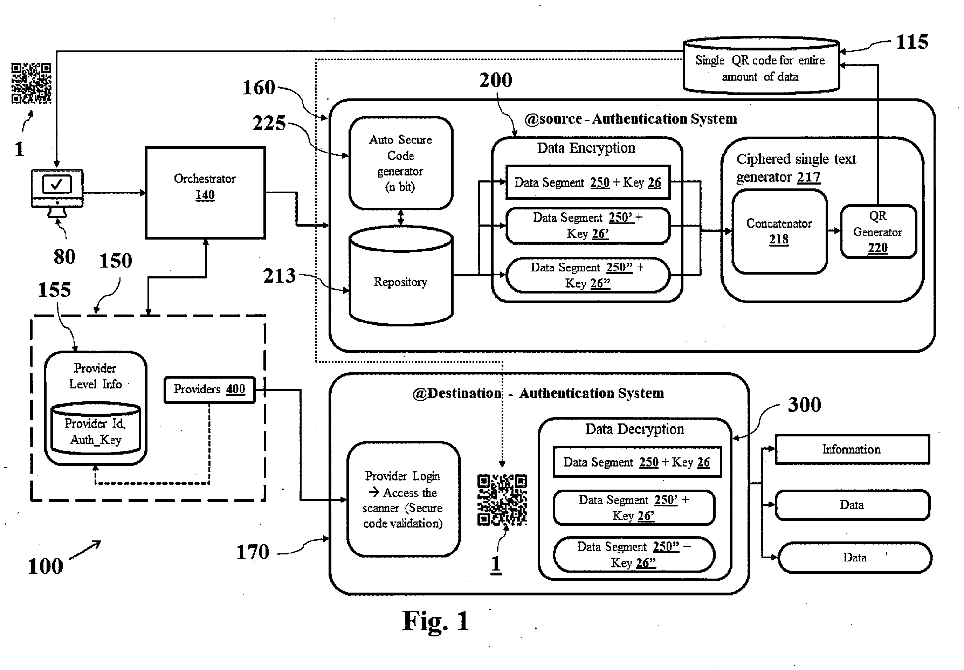

An example of a data processing system 100 for creating a single QR code 1 for a plurality of data segments 250 is illustrated by **Fig. 1****.** A user 80 sends a request to an orchestrator 140. The user request, for example, pertains to data upload onto a secure server. The user request could also pertain to the booking of an itinerary that requires multiple individual information segments to be polled and processed. The orchestrator 140, upon receipt of the request from the user 80, gathers relevant information from one or more data sources pertaining to the user's request.

The orchestrator 140 gathers information related to the user's request from a provider system 150. To this end the orchestrator 140 polls or requests information from the provider system 150. The provider system 150 could relate to any kind of provider, such as internet service providers (ISP), web hosters for secured web storage space, or any other provider of information in the broadest sense. In the example shown in **Fig.1****,** the provider system relates to travel product providers 400. It could alternatively relate to any kind of entities 110, 120. The provider system 150 is capable of supplying provider level information 155 to the requesting orchestrator 140.

The provider level information 155 encompasses a distinct provider identification and an authentication key assigned to a particular provider. The provider level information 155 can also encompass further information concerning particular providers 400, such as reliability, financial solvency, user satisfaction, or the like.

The user 80, for example, books an itinerary via the orchestrator 140, the information about which is then encoded 201 in a QR code to be printed on the user's ticket. The itinerary, as stated above, usually consists of several different stages such as actual travelling via train, plane, ship, bus, or the like and a stay at a local (overnight) accommodation. In addition, it can also include day trips for sightseeing via a local event operator or provider.

The selected itinerary is then transmitted by the orchestrator 140 to an authentication system 160. This authentication system 160 is denoted as a source in **Fig. 1** since it performs the encoding 201 and forms the generating entity of the QR code 1, whereas the authentication system 170, denoted as destination, as it is used to decode and read out relevant information from the QR code 1, for example, on the travel itinerary of the user 80 carrying the QR code 1.

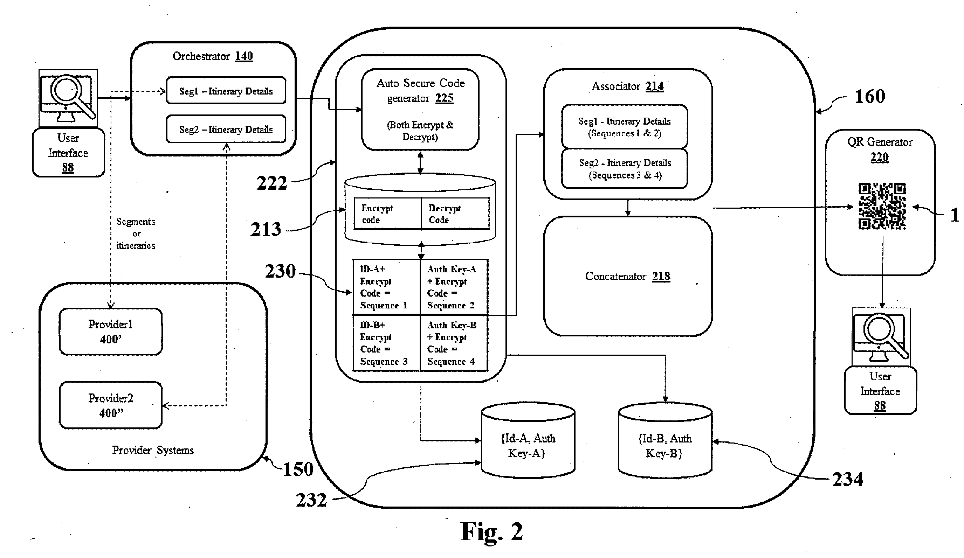

The authentication system 160 contains - inter alia - an autoencoder 222, shown in **Fig. 2****,** an encoding unit 200, and a ciphered single text generator 217.

The autoencoder 222 is capable of encoding and decoding information and contains an Auto Secure Code generator 225 and a repository 213. The Auto Secure Code generator 225 generates encryption keys 26 and decryption keys 27, which are subsequently utilized by the repository 213 to encrypt the provider identification and the authentication keys (public/private keys) assigned to that particular provider.

In some embodiments, the provider IDs and corresponding authentication keys for two different providers 400' and 400" are stored on separate data repositories 232 and 234, respectively. The autoencoder 222 gathers these pieces of information and processes them in a data set 230. In other embodiments, these pieces of information may be stored at the autoencoder 222 without the need of external access.

The provider ID A and the corresponding authentication key A are encrypted leading to two sequences 1 & 2 that are indicative of a first data segment or itinerary detail, whereas the provider ID B and the corresponding authentication key B are encrypted leading to two sequences 3 & 4 that are indicative of a second data segment or itinerary detail.

The autoencoder 222 uses, based on this data, encryption keys 26 that are associated with the individual providers 400.

Subsequently, the encoding unit 200 performs a data encryption on individual data segments 250 of the exemplary itinerary selected by user 80 using those encryption keys 26, resulting in encrypted data segments. Afterwards, the encrypted multiprovider data is concatenated into single data for a QR image generator and/or added together in a similar fashion by concatenator 218. This single data file contains gathered information including all the providers 400, data segments 250, and encryption keys 26 of the plurality of providers 400 involved in the itinerary selected by the user 80 via the orchestrator 140.

The conglomerated data, encoded with the provider specific encryption keys 26, is subsequently embedded in a QR code by a QR code generator 220. The QR code generator 220 can be a commonly known and readily available QR code generator. The present mechanisms include includes conglomerating the individual data segments 250 belonging to different providers 400 together and encoding them with associated encryption keys 26 on a provider level. By doing so, the resulting single QR code 1 may be scanned by a plurality of different providers 400, but only that information that is related to a particular provider 400 can be read out by respective provider 400.

The resulting single QR code 1 it then uploaded to a cloud memory 115. This cloud memory 115 is a web based storage device such as a server or sever farm. The user 80 is granted access to the cloud memory 115 to view, download, forward, or otherwise interact with the generated QR code 1. In addition, the providers 400 can also directly access the cloud memory 115 and scan the QR code 1 when a user 80 wants to engage any of the ordered services, such as a hotel stay, without having to can a printout of the user 80 or the like.

An authentication system 170 is used to verify that a user 80 has access to a demanded service. For example, when a user 80 approaches a check-in desk in a hotel that he/she has booked as part of his/her itinerary and demands a room the hotel provider can either scan the QR code 1 that the user 80 carries with him/her of the trip or check in the cloud memory 115 using the user's name, address, date of birth, or any other provided personal information to identify the user 80.

In order scan and read out any relevant information from the QR code 1 the authentication system 170 is equipped with the same or related provider information 155 as the authentication system 160. In particular, the authentication system 170 holds the provider identification or access credential 25 and cryptographic key 27 used to access and decode the data embedded in the QR code 1.

In order to read the QR code 1, the local provider 400 with which the user 80 interacts, provides its access credential 25 and as a subsequent step its cryptographic key 27 to extract information segments 250 related to it from the QR code 1.

The decoding unit 300, for example, applies a private RSA key to the encrypted data embedded in the QR code 1, more precisely to the parts of the data in the QR code 1 that relate to the provider 400 that is currently interacting with the user 80, that was encoded using a public RSA key of the same provider 400.

The provider 400, or more precisely a worker employed by the provider 400 or an automated scanner operated by the provider 400, can thereby extract the data relating to the user's itinerary in plain text from the QR code 1 and proceed accordingly.

**Fig. 2** illustrates the encoding of data related to providers 400 and user 80 in an alternative data processing system 100 where the QR generator 220 is located external to the authentication system 160.

The user 80 submits requests to the orchestrator 140 via a user interface 88 on his/her terminal device, such as a smart phone, laptop, or the like. The orchestrator 140, in turn, requests or polls the external provider systems 150 to gather necessary information for the user's itinerary selections. For example, provider 400' might be an airline or other kind of air traffic provider and provider 400" might be a provider of overnight accommodations such as a hotel. The orchestrator 140 then receives data segments 250 related to itinerary details of the user's itinerary request from the provider systems 150.

The orchestrator 140 transmits the data segments 250 to the authentication system 160, where the Auto Secure Code generator 225 of the autoencoder 222 uses both the received data segments 250 and the provider information 155 stored in the autoencoder's repository 213, to encode the data segments 250 with the individual encryption keys 26 associated with the providers 400 on a provider level.

The associator 214 associates provider booking segment/itinerary details with encrypted provider identification and keys. The plurality of encoded data segments are transferred to the concatenator 218 to concatenate or otherwise join the plurality of encoded data segments into a single data object, similar to the ciphered single text generator 217 of Fig. 1. For example, the concatenator 218 creates a single raw data for a QR image generator, wherein that image consists of multi provider booking data along with the respective encrypted information.

The final, single data object containing all the individual itinerary information from the plurality of providers 400 of the itinerary the user 80 selected is sent to an external QR code generator 220 to embed this information - still on a provider level segregated by the individual encryption keys 26 related to the respective provider 400 - into a single QR code 1. This QR code 1 is subsequently presented to the user 80 via the user interface 88 of the user's terminal device.

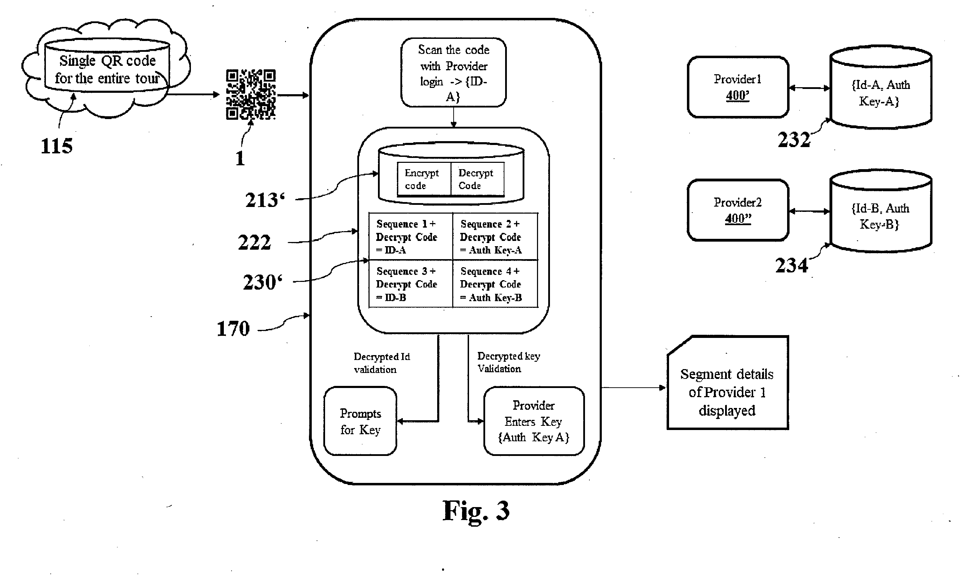

The process of scanning a QR code 1 by an entity 110, 120 in order to extract encoded data pertaining to this entity is illustrated in **Fig. 3****.** The entity could be, for example, a hotel chain and the scanning could then be performed by a reception clerk at one of the hotels belonging to the entity 110. When a user 80 approaches the clerk to get a room key as part of the user's itinerary, the hotel clerk can enter the user's name and/or other personal information about the user 80 to identify him/her and scan the cloud memory 115 for an entry, i.e., a QR code 1 relating to said user 80.

Alternatively, the user 80 might use a self-check-in desk and retrieve the QR code 1 from the cloud memory 115 during the check-in process. Alternatively, the user 80 may also carry a print out of the QR code 1 with him/her or have it on display on a mobile terminal device to be scanned from there.

The QR code 1 is scanned with the access credential 25 of the entity 110, for example, the provider 400, such as the above-mentioned hotel chain. Upon verification of the provider id, i.e. the access credential 25, the autoencoder 222 of the authentication system 170 tries to decode the encrypted information embedded in the QR code 1. For this purpose, a data set 230' corresponding to data set 230in connection with a repository 213' corresponding to repository 213 of the authentication system 160 are used. The pieces of data might be again retrieved from the separate repositories 232 and 234. The entity 110 is prompted for the correct cryptographic key 27 relating to the entity 110. For example, a private RSA key matching the public RSA key used for encoding/encrypting the data segments 250 related to the entity 110, such as provider details of a user's itinerary.

After entering the correct decryption key 27 and having it validated by the authentication system 170, the information portions embedded in the QR code 1 that relate to the entity 110 the cryptographic key 27 of which was just used to decode the QR code 1 is displayed. For example, the hotel clerk of the discussed example case is displayed a message on his/her handheld scanning device that confirms that the user 80 indeed is eligible to receive a room key for the hotel for a given time as part of the booked itinerary.

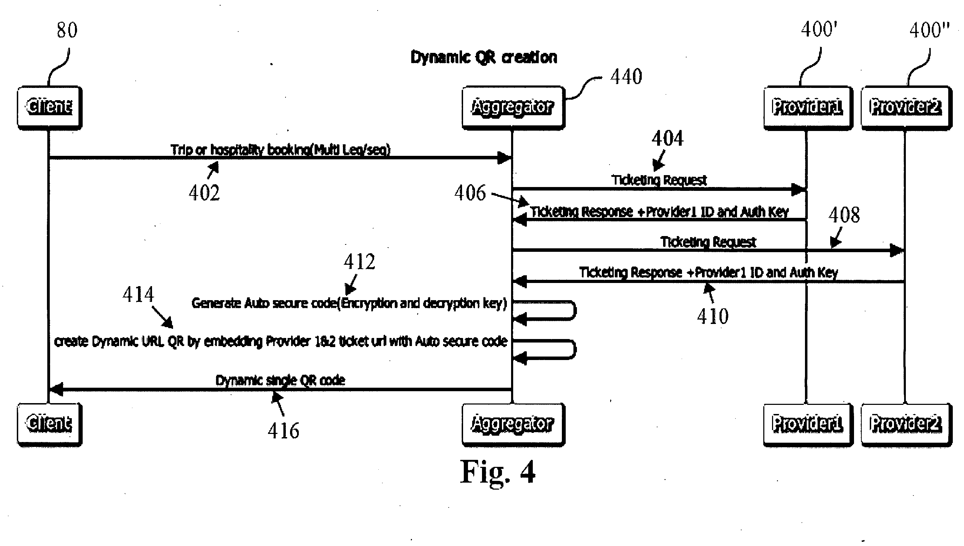

**Fig. 4** illustrates the message exchange between the user 80, more precisely the client program operated by user 80, and other entities 110, 120. These entities might be providers 400, an aggregator 440, or the like.

The user 80 compiles an itinerary by selecting trip and/or hospitality options 402. This information is gathered at an aggregator 400. Based on this information from the user 80, the aggregator 440 sends out ticket requests 404, 408 to one or more provides 400, such as travel product providers 400' and 400". Those providers 400 answer to the aggregator's requests with a ticketing response as well as provider identifications and authentication keys 406, 410.

Upon receipt of this provider-specific information the aggregator 440 generates an auto secure code, i.e. encryption keys 26 and decryption keys 27. The aggregator 440 also creates the single QR code 1 using one or more dynamic URLs by embedding the provider specific information along with the itinerary information and the auto secure code in said QR code. Subsequently, the aggregator 440 provides the single QR code 1 to the user 80.

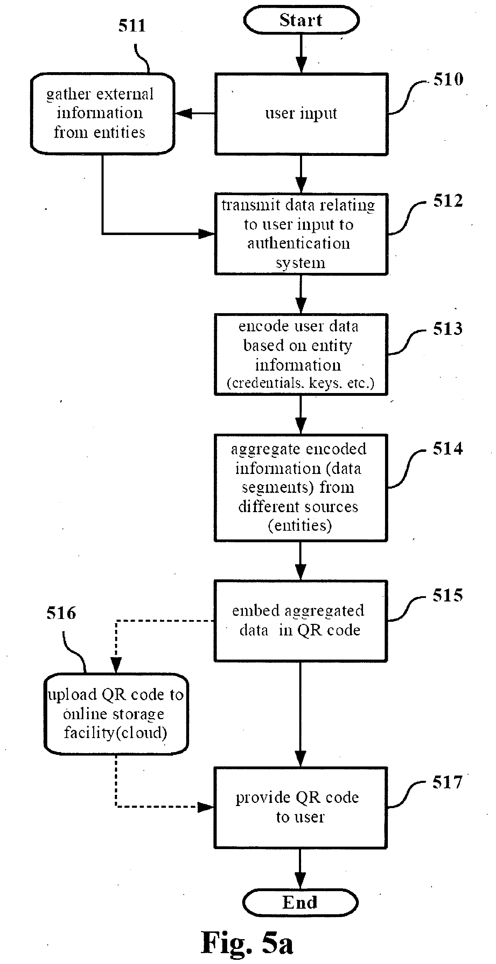

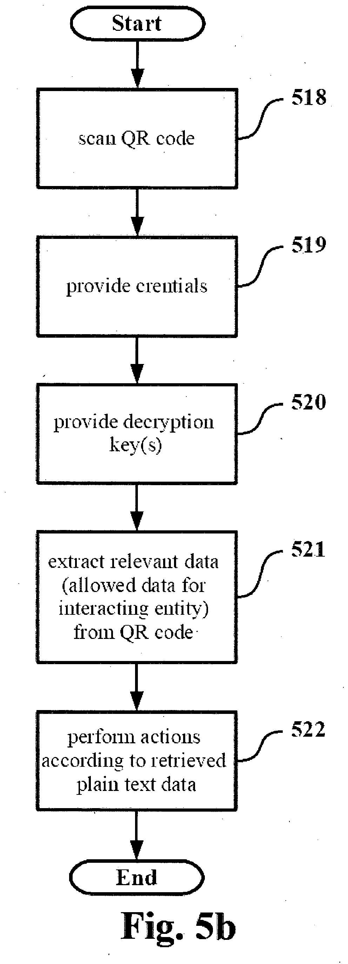

The process of data encoding 201 and data decoding 301 is shown in two flowcharts illustrated by **Fig. 5a** and **5b****,** respectively. In 510, the user 80 inputs one or more requests for services via a user interface 88 of the user's terminal device. These requests are directed to an orchestrator 140 that may also poll and/or request data from external sources, such as entities 110, 120, that are employed by the orchestrator 140 to fulfil the user's requests. In 512 the data relating to the user's request along with potential further information stemming from the external sources, i.e. entities 110, 120, assisting the orchestrator 140 with fulfilling the demands of the user 80 is transmitted to an authentication system 160.

In 513, the authentication system encodes, for example, with an autoencoder 222 the data relating to the request from the user 80 with access credentials 24 and cryptographic keys 26 that relate to the external entities 110, 120. Subsequently, in 514, the authentication system 160 aggregates the now encoded data segments 250 stemming from different data sources such as entities 110, 120 into a single data object. This data object contains information of different data sources, for example different travel product providers 400, in one file or file structure. Different parts of this data object can be encoded with different cryptographic keys 26, each of which relating to a specific entity or provider.

The entire encoded data that has been conglomerated from different sources as described above, is embedded in a single QR code 1 in 515. Although the end product is a single QR code 1 that may be scanned in a single scanning process, the individual data segments that are associated with different entities, such as providers 400, may only be read out later on a provider level, meaning that each entity 110 scanning the QR code 1 can only extract the data segments 250 belonging to it whereas access to other data segments 250' is denied.

The finished QR code 1 may optionally be uploaded to a cloud memory 115 as indicated by the dashed arrows leading to and from 516. The QR code 1 has to be accessible by the user 80, for whom it is ultimately generated for. This can be achieved via a reference to the cloud memory 115 or the QR code 1 could be directly sent to the user 80 and, for example, be displayed on the user interface 88 of the user's terminal device as indicated in 517.

The data decoding process, which might be temporally and locally separate from the encoding process, is illustrated in **Fig. 5b****.** In 518, the QR code 1 is being scanned, for example, by a hotel clerk acting as an employee of entity 110. In order to gain access to the data content embedded in the QR code 1, access credentials 25 of the scanning entity have to be provided in step 519. Upon verification of this credentials, a cryptographic key 27 as part of a sort of two-step authentication has to be also provided by the entity in step 520 before access to the respective data segments 250 may be granted.

With the access credentials 25 and the decryption key(s) 27 entered into the scanner, the data segments 250 that pertain to the entity 110 are extracted from the QR code 1 in step 521, for example, by using a RSA-decryption process on the allowed parts, i.e. the encoded segments had hold information related to the entity, such as provider 400, that supplies the part of the itinerary currently requested by the user 80.

The decoded data segments 250 retrieved from the QR code 1 then initiate an action that is appropriate for this data in 522. For example, an "Accepted" notification can be displayed on a handheld QR scanner operated by an employee of entity 110 and provide the user 80 with the eligible services.

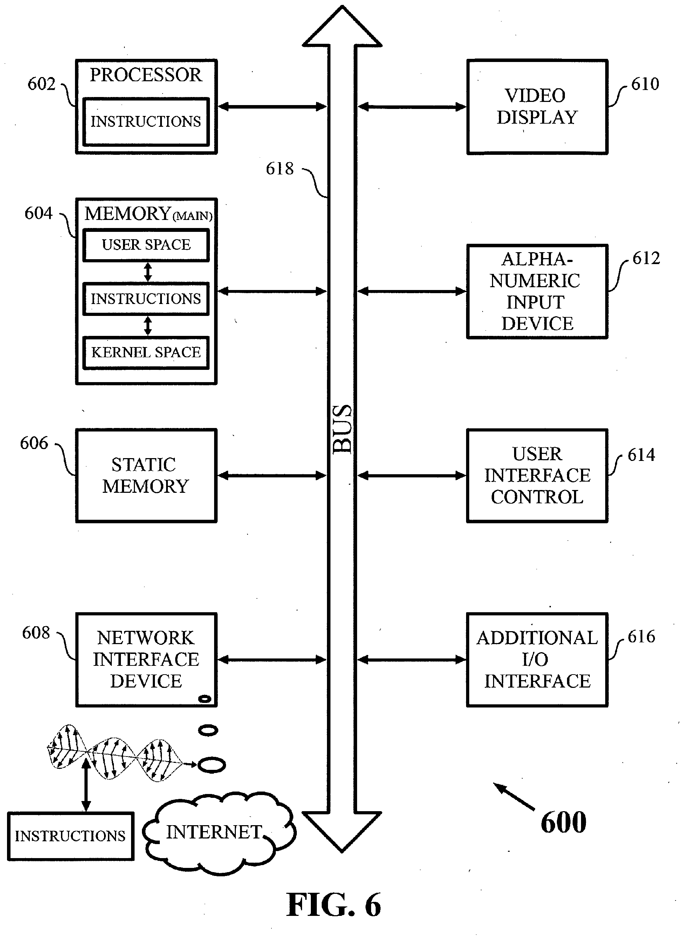

An exemplary computer device for carrying out the encoding 201 and/or the decoding 301 or at least parts thereof is illustrated by Fig. 6.

The computer system 600 is arranged to execute a set of instructions on processor 602, to cause the computer system 600 to perform tasks as described herein.

The computer system 600 includes a processor 602, a main memory 604 and a network interface 608. The main memory 104 includes a user space, which is associated with user-run applications, and a kernel space, which is reserved for operating-system- and hardware-associated applications. The computer system 600 further includes a static memory 606, e.g. non-removable flash and/or solid-state drive and/or a removable Micro or Mini SD card, which permanently stores software enabling the computer system 600 to execute functions of the computer system 600. Furthermore, it may include a video display 610, a user interface control module 614 and/or an alpha-numeric and cursor input device 612. Optionally, additional I/O interfaces 616, such as card reader and USB interfaces may be present. The computer system components 602 to 609 are interconnected by a data bus 618.

In general, the routines executed to implement the embodiments, whether implemented as part of an operating system or a specific application, component, program, object, module or sequence of instructions, or even a subset thereof, may be referred to herein as "computer program code" or simply "program code". Program code typically comprises computer-readable instructions that are resident at various times in various memory and storage devices in a computer and that, when read and executed by one or more processors in a computer, cause that computer to perform the operations necessary to execute operations and/or elements embodying the various aspects of the embodiments of the invention. Computer-readable program instructions for carrying out operations of the embodiments of the invention may be, for example, assembly language or either source code or object code written in any combination of one or more programming languages.

In certain alternative embodiments, the functions and/or acts specified in the flowcharts, sequence diagrams, and/or block diagrams may be re-ordered, processed serially, and/or processed concurrently without departing from the scope of the invention. Moreover, any of the flowcharts, sequence diagrams, and/or block diagrams may include more or fewer blocks than those illustrated consistent with embodiments of the invention.

The terminology used herein is for the purpose of describing particular embodiments only and is not intended to be limiting of the embodiments of the disclosure. It will be further understood that the terms "comprise" and/or "comprising," when used in this specification, specify the presence of stated features, integers, steps, operations, elements, and/or components, but do not preclude the presence or addition of one or more other features, integers, steps, operations, elements, components, and/or groups thereof. Furthermore, to the extent that the terms "includes", "having", "has", "with", "comprised of", or variants thereof are used in either the detailed description or the claims, such terms are intended to be inclusive in a manner similar to the term "comprising".

While a description of various embodiments has illustrated all of the inventions and while these embodiments have been described in considerable detail, it is not the intention of the applicants to restrict or in any way limit the scope of the appended claims to such detail. Additional advantages and modifications will readily appear to those skilled in the art. The invention in its broader aspects is therefore not limited to the specific details, representative apparatus and method, and illustrative examples shown and described. Accordingly, departures may be made from such details without departing from the spirit or scope of the applicant's general inventive concept.

## Claims

1. Method of data processing of a first set of data and a second set of data, wherein the method comprises:
- encoding the first and second set of data to create a unified representation of the first and second set of data represented in a single quick response, QR, code using at least one cryptographic key from a first set of cryptographic keys associated with the first set of data and at least one cryptographic key from a second set of cryptographic keys associated with the second set of data;
- decoding the first set of data from the single QR code based on the first set of cryptographic keys or decoding the second set of data from the single QR code based on the second set of cryptographic keys.

2. Method according to claim 1, wherein the data of the first and second set of data comprises multi-segmented information, and wherein each segment is associated with an identification or access credential and an authentication key, wherein a QR generator merges the multi-segmented information into the single QR code based on the identifications or access credentials and authentication keys.

3. Method according to claim 1 or 2, wherein the single QR code comprises a third set of data, which contains no classified information and wherein said information is accessible without using encryption keys.

4. Method according to any one of claims 1 to 3, wherein the encoding is based on a private key and an identification to encrypt a data segment or set of data and is performed using an autoencoder.

5. Method according to claim 4, wherein the decoding uses an Autoencoder Artificial Neural Network Public Key Cryptography, AANNPKC, algorithm to decode the data segment or set of data.

6. Method according to any one of claims 1 to 5, wherein the first and second set of data and the first and second set of cryptographic keys relate to a first and second entity, respectively, designated to read out information from the single QR code, wherein the single QR code is generated based on the identifications or access credentials and encryption keys of those entities.

7. Method according to claim 6, wherein the sets of data refer to travel itineraries or parts thereof and wherein the entities comprise at least two different travel product providers.

8. Method according to any one of claims 1 to 7, wherein the first set of data is associated with a first entity and the second set of data is associated with a second entity, wherein the decoding comprises:
- the first entity processing the single QR code using an access credential of the first entity;
- in response to verifying access of the first entity to the single QR code, prompting the first entity for a cryptographic key of the first entity; and
- in response to verifying the cryptographic key of the first entity, providing a reference to the first entity for accessing the first set of data.

9. Method according to claim 8, wherein attempting to access a set of data encoded within the single QR code without providing the corresponding identification or access credential and an authentication key prompts an error message and access to said set of data is denied.

10. Method according to any one of claims 1 to 9, wherein the single QR code is a dynamic QR code, wherein data underlying the first or second set of data that is represented by the single QR code is changeable without changing the single QR code by updating the underlying information segments in a blockchain.

11. Method according to any one of claims 1 to 10, wherein the single QR code is stored in a cloud memory and is readable by an entity to which a set of data is related directly from said cloud memory without prior download by a user for whom the single QR code has been created.

12. Method according to any one of claims 1 to 11, wherein the single QR code is secured and/or registered in a blockchain.

13. Method according to any one of claims 10 to 12, wherein the data underlying the first and second set of data are concatenated into a single JSON or XML response by adding multiple encrypted segments and the entire data is used to generate a shortened Uniform Resource Locator, URL, for the entire response, which is used to generate the dynamic QR code.

14. Method according to any one of claims 10 to 12, wherein a shortened URL for each data segment or set of data is created and embedded in the dynamic QR code.

15. Method according to claim 14, wherein the dynamic QR code comprises sub-matrices corresponding to the multiple shortened URLs.

16. Data processing system for creating a quick response, QR, code representing a first set of data and a second set of data, the system comprising:
- an encoding unit to create a unified representation of the first and second set of data represented as the single QR code using at least one cryptographic key from a first set of cryptographic keys associated with the first set of data and at least one cryptographic key from a second set of cryptographic keys associated with the second set of data;
- a decoding unit to read out data related to the first set of data from the single QR code based on the first set of cryptographic keys or read out data related to the second set of data from the single QR code based on the second set of cryptographic keys.

17. Data processing system according to claim 16, wherein
- the encoding unit comprises a QR generator that merges multi-segmented information into the single QR code based on identifications or access credentials and authentication keys for each segment; and
- the decoding unit implements a two-step authentication based on an identification or access credential and a cryptographic key.
